# FASCICULE DE BREVET EUROPEEN

(11) **EP 2 994 324 B1**
(45) Date de publication et mention de la délivrance du brevet: **05.04.2017**
(21) Numéro de dépôt: 14719038.3
(22) Date de dépôt: 04.03.2014
(51) Int. Cl.: B60C 25/132

(54) **DISPOSITIF EMBARQUE DE MONTAGE/DEMONTAGE DE PNEUMATIQUES DE VEHICULES DU TYPE POIDS LOURDS**
BORDVORRICHTUNG ZUR MONTAGE/DEMONTAGE VON REIFEN AN LASTKRAFTWAGEN
ONBOARD DEVICE FOR MOUNTING/DISMOUNTING TYRES OF HEAVY GOODS VEHICLES

(30) Priorité: 07.05.2013 FR 1354210
(43) Date de publication de la demande: 16.03.2016
(73) Titulaire: Guernet Compresseurs, 89300 Joigny (FR)
(72) Inventeur: GUERNET, Hervé, F-89500 Chaumot (FR)
(74) Mandataire: Oudin, Stéphane
(86) Numéro de dépôt international: PCT/FR2014/050480
(87) Numéro de publication internationale: WO 2014/181048

(56) Documents cités:
- EP-A2- 1 238 831

## Description

### Domaine technique

La présente invention concerne un dispositif de montage/démontage de pneumatiques de véhicules du type poids lourds principalement, ledit dispositif étant embarqué sur un véhicule utilitaire léger pour permettre une intervention rapide à l'extérieur, notamment hors d'un garage ou d'un magasin spécialisé dans l'entretien des véhicules et le montage/démontage de pneumatiques.

### Technique antérieure

On connaît déjà de nombreux dispositifs permettant le montage/démontage de pneumatiques, mais également leur gonflage (voir le document EP-A-1238831). La grande majorité de ces dispositifs est installée à demeure dans des garages ou des magasins spécialisés dans l'entretien des véhicules. Lesdits dispositifs comportent classiquement un cadre destiné à supporter des moyens pour l'accouplement et la rotation d'une jante autour d'un axe de rotation, classiquement horizontal, et un bras de travail muni à une première extrémité d'une tête de travail pour le montage/démontage d'un pneumatique sur/de ladite jante. Lesdits moyens d'accouplement et de rotation et ledit bras sont associés de manière mobile audit cadre respectivement selon une direction sensiblement perpendiculaire audit axe de rotation et selon une direction qui est sensiblement parallèle audit axe de rotation. Lesdits moyens d'accouplement et de rotation et ledit bras sont mis en mouvement grâce à l'énergie disponible dans ces garages ou des magasins spécialisés, à savoir de manière classique grâce à l'électricité et/ou un réseau d'air comprimé. Par conséquent, ce type de dispositifs, qui outre d'être lourd, encombrant et bruyant, n'est pas adapté pour être embarqué sur un véhicule léger dit d'intervention.

Pour pallier en partie ces différents inconvénients, on connaît des dispositifs de montage/démontage de pneumatiques aptes à être embarqués sur des véhicules utilitaires légers. Toutefois, ces dispositifs, qui demeurent lourds et encombrants, comportent de nombreuses pièces et font appel à plusieurs sources d'énergie différentes (électrique, hydraulique, aéraulique et thermique) réduisant d'autant la fiabilité et surtout le rendement desdits dispositifs, ces derniers présentant alors un bilan carbone plutôt mauvais.

### Exposé de l'invention

Le but de la présente invention est donc de pallier les inconvénients précédemment cités et de proposer un perfectionnement des dispositifs connus apte à être embarqué dans un véhicule utilitaire léger d'intervention, ledit dispositif étant facile à mettre en oeuvre sur un site d'intervention, fiable et d'entretien aisé, ayant un poids, un encombrement et un niveau sonore compatibles avec le type de véhicule léger et les normes et règlements en vigueur, et présentant un bilan énergétique satisfaisant.

Conformément à l'invention, il est donc proposé un dispositif de montage/démontage de pneumatiques de véhicules, notamment du type poids lourds, embarqué dans un véhicule utilitaire léger, ledit dispositif comportant au moins un premier châssis, un bras articulé à l'une des extrémités dudit châssis, un mandrin solidaire de l'extrémité libre dudit bras et agencé pour solidariser et faire tourner une jante autour d'un premier axe de rotation sensiblement horizontal, et un porte-outil muni d'au moins un outil de montage/démontage de pneumatiques, ledit porte-outil étant télescopique et apte à se déplacer par rapport audit bras pour positionner ledit outil en position de travail. Ledit dispositif est remarquable en ce qu'il comporte un moteur thermique solidaire du premier châssis et une pompe hydraulique couplée directement sur ledit moteur thermique et apte à distribuer de l'huile sous pression pour au moins indirectement, d'une part, mettre en mouvement le bras et le porte-outil afin de positionner le mandrin et l'outil dans leur position de travail respective et, d'autre part, faire tourner le mandrin autour dudit premier axe de rotation.

Le bras comporte une première portion articulée à l'une des extrémités dudit premier châssis autour d'un deuxième axe sensiblement horizontal et perpendiculaire à l'axe longitudinal du dispositif, ladite première portion étant mise en mouvement par un premier actionneur.

Le bras comporte de préférence une deuxième portion articulée à l'extrémité libre de ladite première portion autour d'un troisième axe sensiblement horizontal et perpendiculaire à l'axe longitudinal du dispositif, ladite deuxième portion étant mise en mouvement par un deuxième actionneur.

De manière avantageuse, le porte-outil est associé au moins à un troisième et un quatrième actionneurs disposés respectivement entre le bras et le porte-outil et le long dudit porte-outil.

Selon un mode de réalisation préféré, les premier, deuxième, troisième et quatrième actionneurs sont du type vérin hydraulique linéaire.

La pompe hydraulique alimente au moins deux moteurs hydrauliques, respectivement nommés premier et deuxième moteurs, le premier moteur permettant l'actionnement desdits premier, deuxième, troisième et quatrième actionneurs et le deuxième moteur assurant la rotation du mandrin autour dudit premier axe de rotation.

Le deuxième moteur est avantageusement à vitesse variable.

Selon un mode de réalisation préféré, le dispositif comporte un deuxième châssis tubulaire de forme globalement parallélépipédique, solidaire du premier châssis et à l'intérieur duquel sont disposés au moins le moteur thermique et la pompe hydraulique.

De manière avantageuse, le deuxième châssis est recouvert, en mode normal d'utilisation, de panneaux insonorisés amovibles.

Le dispositif comporte de préférence à l'intérieur du deuxième châssis un bloc compresseur entraîné par le moteur thermique grâce à un ensemble poulies-courroies, ledit bloc compresseur étant du type à pistons étagés.

### Description sommaire des figures

D'autres avantages et caractéristiques ressortiront mieux de la description qui va suivre d'un mode d'exécution d'un dispositif de montage/démontage de pneumatiques selon l'invention en référence aux figures annexées sur lesquelles :
- la figure 1 est une vue en perspective d'un dispositif de montage/démontage et de gonflage de pneumatiques selon l'invention avec son bras articulé replié ;
- la figure 2 est une vue de face du dispositif de la figure 1 ;
- la figure 3 est une vue de dessus du dispositif de la figure 1 ;
- la figure 4 est une vue de gauche du dispositif de la figure 1 ;
- la figure 5 est une vue latérale d'un véhicule utilitaire léger embarquant le dispositif de la figure 1, le bras articulé étant replié ;
- la figure 6 est une vue arrière du véhicule utilitaire léger de la figure 5 avec le dispositif de la figure 1, le bras articulé étant replié ;
- la figure 7 est une vue arrière du véhicule utilitaire léger de la figure 5 avec le dispositif de la figure 1, le bras articulé étant déplié.

### Meilleure manière de réaliser l'invention technique

On décrira ci-après un dispositif de montage/démontage de pneumatiques de véhicules du type poids lourds apte à être embarqué sur un véhicule utilitaire léger, c'est-à-dire sur un véhicule dont le poids total autorisé en charge n'excède pas 3,5 tonnes et pouvant être conduit par tout détenteur d'un permis de catégorie B (pour la France) ou analogue. Il va de soi que ledit dispositif pourra être utilisé pour monter/démonter tout type de pneumatiques et être installé sur d'autres types de véhicules, notamment les camions poids lourds, sans sortir du cadre de la présente invention.

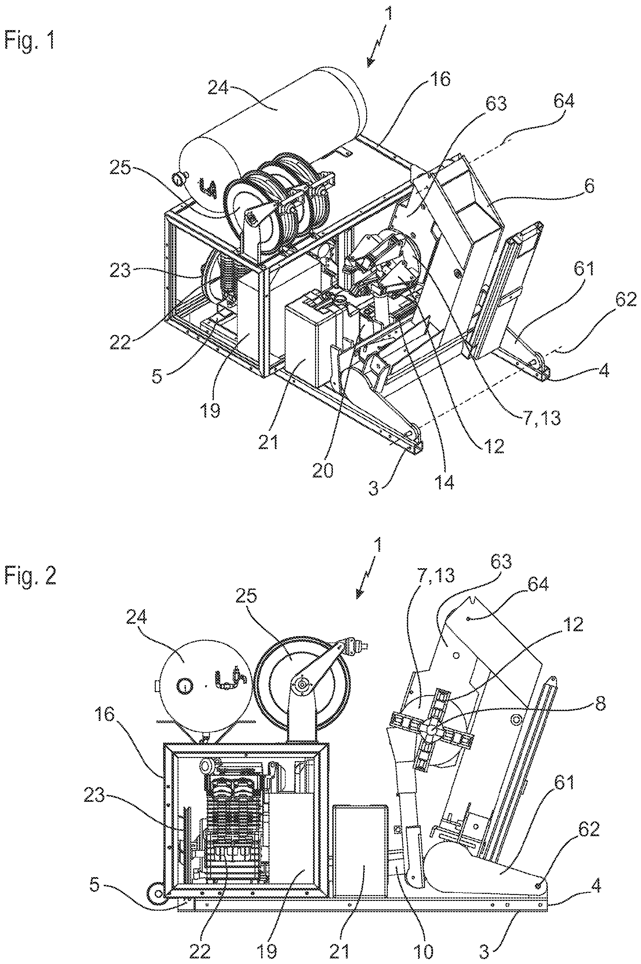

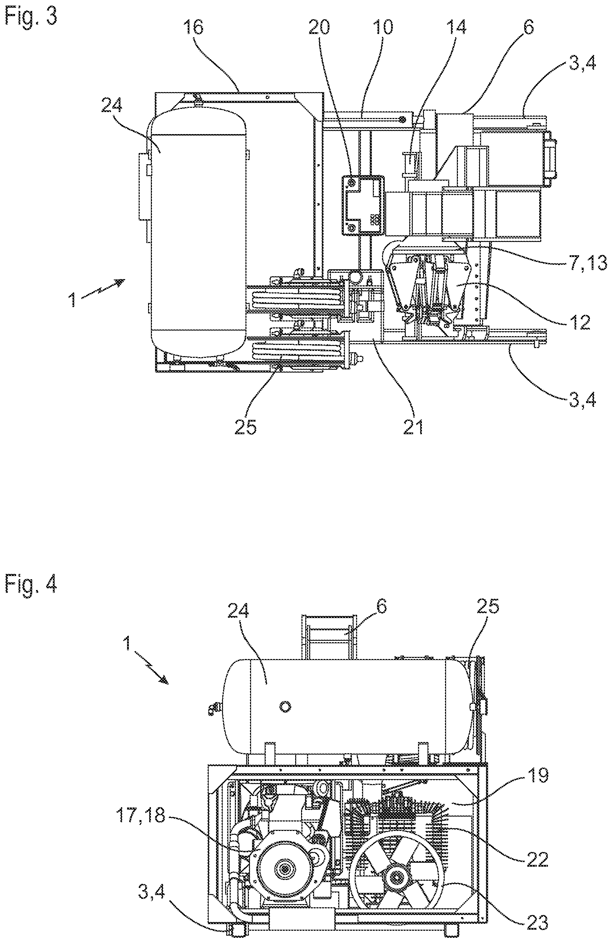

En référence aux figures 1 à 7, le dispositif 1 de montage/démontage de pneumatiques de véhicules du type poids lourds est prévu pour être embarqué dans un véhicule utilitaire léger 2. Le dispositif 1 comporte un premier châssis 3 tubulaire comprenant deux longerons longitudinaux 4 sensiblement parallèles et au moins deux longerons transversaux 5 sensiblement parallèles et disposés perpendiculairement à l'une des extrémités desdits longerons longitudinaux 4, un bras 6 articulé à l'une des extrémités desdits longerons longitudinaux 4, un mandrin 7 solidaire de l'extrémité libre dudit bras 6 et agencé pour solidariser et faire tourner autour d'un premier axe 8 de rotation sensiblement horizontal une jante (non représentée) d'un véhicule du type poids lourd, et un porte-outils 9 solidaire dudit bras 6.

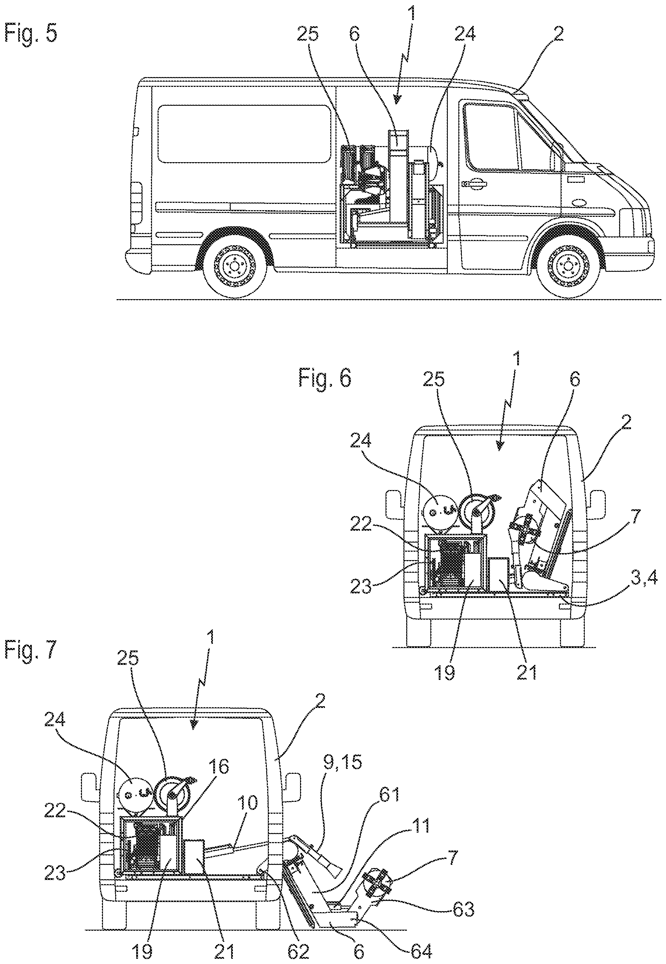

Le bras 6 comprend au moins une première portion 61 articulée à l'une des extrémités desdits longerons longitudinaux 4 autour d'un deuxième axe 62 sensiblement horizontal et perpendiculaire à l'axe longitudinal du dispositif 1 et donc aux longerons longitudinaux 4. De préférence, le bras 6 comporte également une deuxième portion 63 articulée à l'extrémité libre de ladite première portion 61 autour d'un troisième axe 64 sensiblement horizontal et perpendiculaire à l'axe longitudinal du dispositif 1. Cette configuration permet de déplier le bras 6 afin de positionner le mandrin 7 à l'extérieur du véhicule utilitaire léger 2 dans sa position de travail (Cf. figure 7) et de replier le bras 6 en deux sur lui-même à l'intérieur dudit véhicule utilitaire léger 2 en limitant l'encombrement hors-tout du dispositif 1 une fois replié (Cf. figure 6). Dans cette configuration préférée, le mandrin 7 est alors solidaire de l'extrémité libre de ladite deuxième portion 63 du bras 6. Le bras 6 est mis en mouvement grâce à un premier actionneur 10 disposé entre le premier châssis 3 et la première portion 61 et à un deuxième actionneur 11 (Cf. figure 7) disposé entre la première portion 61 et la deuxième portion 63, lesdits premier et deuxième actionneurs 10,11 étant de préférence du type vérin hydraulique linéaire.

Le mandrin 7 comprend un système de blocage de jante comportant une pluralité de griffes 12 disposées à égale distance autour d'un moyeu 13 apte à pivoter par rapport au bras 6 autour dudit deuxième axe 8 de rotation et agencé pour permettre l'auto-centrage de la jante lors de sa mise en place sur ledit moyeu 13, lesdites griffes 12, qui servent à immobiliser ladite jante sur le mandrin 7 pour permettre son entrainement en rotation et le montage/démontage d'un pneumatique (non représenté), sont avantageusement revêtues d'une couche anti-rayure afin d'éviter d'endommager la jante.

Le porte-outil 9 reçoit à son extrémité libre un outil (non représenté) agencé pour s'insérer entre un pneumatique et une jante afin de monter/démonter ledit pneumatique. Pour positionner l'outil dans sa position de travail correspondant à la position où ledit outil est prêt à être inséré entre la jante et le pneumatique, le porte-outil 9 est télescopique et apte à se déplacer par rapport audit bras 6 selon au moins une direction sensiblement horizontale et perpendiculaire aux longerons longitudinaux 4 dudit premier châssis 3. Pour ce faire, le porte-outil 9 est associé au moins à un troisième 14 et un quatrième 15 actionneurs disposés respectivement entre le bras 6 et le porte-outil 9 et le long dudit porte-outil 9, lesdits troisième et quatrième actionneurs 14,15 étant de préférence du type vérin hydraulique linéaire.

Le dispositif 1 de montage/démontage de pneumatiques selon l'invention comporte un deuxième châssis 16 tubulaire de forme globalement parallélépipédique, solidaire du premier châssis 3 et à l'intérieur duquel sont disposés au moins un moteur thermique 17 et une pompe hydraulique 18 flasquée sur la culasse dudit moteur thermique 17 et couplée directement sur l'arbre à came de ce dernier. Cette configuration en couplage direct supprime des éléments de transmission complémentaires et permet de réduire significativement l'encombrement et le nombre de pièces d'usure, mais également la puissance consommée par le moteur thermique 17.

Le dispositif 1 comporte en outre à l'intérieur du deuxième châssis 16 un réservoir d'huile 19 pour alimenter la pompe hydraulique 18 et des distributeurs hydrauliques (non représentés) pour distribuer l'huile sous pression issue de la pompe hydraulique 18 aux différents actionneurs du type vérins et/ou moteurs.

L'Homme du Métier n'aura aucune difficulté pour déterminer le nombre et le type de distributeurs hydrauliques à mettre en oeuvre.

Le deuxième châssis 16 est avantageusement recouvert, en mode normal d'utilisation, de panneaux insonorisés (non représentés) afin de réduire significativement le niveau sonore du dispositif 1 généré pour l'essentiel par le moteur thermique 17. Lesdits panneaux insonorisés sont de préférence amovibles pour des raisons évidentes de maintenance et d'entretien des moteur thermique 17 et pompe hydraulique 18.

Le moteur thermique 17 est avantageusement un moteur diesel à refroidissement liquide d'une puissance de l'ordre de 17 cv. Ce moteur thermique 17 démarre à l'aide d'un démarreur alimenté par une batterie 20 et fonctionne grâce au gasoil contenu dans un réservoir 21, la batterie 20 et le réservoir 21 étant fixés sur le premier châssis 3 du dispositif 1 entre le deuxième châssis 16 et le bras 6.

Selon un mode de réalisation préféré, la pompe hydraulique 18 tourne à 1300 tours par minutes et délivre un débit de 16 litres par minute avec une pression maximale de 180 bars. Cette pompe hydraulique 18 alimente au moins deux moteurs hydrauliques (non représentés), nommés premier et deuxième. Le premier moteur permet l'actionnement desdits premier, deuxième, troisième et quatrième actionneurs 10,11,14,15 et le deuxième moteur assure la rotation du mandrin 7. Ce dernier est de préférence un moteur à vitesse variable ajustable par l'utilisateur du dispositif 1 en fonction de l'opération à effectuer, la variation de vitesse étant réalisée grâce à un régulateur de débit (non représenté) avantageusement du type trois voies compensé en pression. Par ailleurs, l'utilisation d'un moteur hydraulique pour faire tourner le mandrin 7 permet d'avoir un couple plus important et donc de faciliter le montage/démontage du pneumatique.

Pour pouvoir gonfler le pneumatique une fois monté sur la jante, le dispositif 1 comporte avantageusement à l'intérieur du deuxième châssis 16 un bloc compresseur 22 entraîné par le moteur thermique 17 grâce à un ensemble poulies-courroies 23, ledit bloc compresseur 22 étant du type à pistons étagés. Pour des raisons de facilité d'utilisation, le dispositif 1 comporte également une cuve 24 apte à contenir de l'air sous pression provenant dudit bloc compresseur 22 et au moins un enrouleur 25 de tuyaux pneumatiques raccordés à ladite cuve 24 et apte à distribuer de l'air sous pression à l'intérieur du pneumatique pour le gonfler. Lesdits enrouleur 25 et cuve 24 sont disposés avantageusement sur le dessus du deuxième châssis 16.

Selon un mode de réalisation préféré, le dispositif comporte deux enrouleurs 25, un premier comportant un tuyau pneumatique muni d'un raccord apte à coopérer avec les valves de pneumatiques de voitures et un second comportant un tuyau pneumatique muni d'un raccord apte à coopérer avec les valves de pneumatiques de camions.

Cette configuration permet d'obtenir un dispositif 1 totalement autonome permettant de monter/démonter mais également de gonfler plusieurs types de pneumatiques rapidement à l'extérieur, notamment hors d'un garage ou d'un magasin spécialisé dans l'entretien des véhicules.

Pour faciliter son utilisation, le dispositif 1 selon l'invention, qui est embarqué à l'intérieur d'un véhicule utilitaire léger 2, comporte de préférence un bloc de commande portatif (non représenté) permettant à un utilisateur de piloter ledit dispositif 1 tout en étant à l'extérieur dudit véhicule utilitaire léger 2. Le bloc de commande portatif est relié audit dispositif 1 par une connexion filaire au moyen d'un câble. Toutefois, cette connexion pourra être du type sans fil sans sortir du cadre de la présente invention.

On comprend bien que le dispositif 1 de montage/démontage de pneumatiques permet de :
- supprimer tous dangers électriques pour l'utilisateur grâce à la suppression de tous les organes électriques tels que par exemple génératrice de courant, moteurs électriques, armoire de gestion, câblage,
- réduire les coûts de fabrication et d'augmenter la fiabilité mécanique grâce notamment à la réduction du nombre de pièces et à la suppression de nombreuses pièces d'usure en mouvement telles que les poulies, galets et courroies,
- réduire et simplifier les opérations de maintenance, réduire le poids et l'encombrement grâce à une réduction du nombre de pièces.

Les poids et encombrement réduits permettent d'embarquer facilement le dispositif 1 selon l'invention à l'intérieur d'un véhicule utilitaire léger 2.

### Possibilité d'application industrielle

Le dispositif 1 selon l'invention s'applique plus particulièrement au montage/démontage de pneumatiques de véhicules du type poids lourds, mais il peut également être utilisé pour monter/démonter des pneumatiques d'un tout autre type de véhicules tel que les voitures par exemple.

De même, si le dispositif 1 est principalement destiné à être embarqué dans un véhicule utilitaire léger, il va de soi qu'il peut également être disposé dans un tout autre type de véhicule ou dans un local du type garage ou magasin spécialisé dans l'entretien des véhicules.

Enfin, il va de soi que les exemples de dispositifs 1 de montage/démontage de pneumatiques conformes à l'invention qui viennent d'être décrits ne sont que des illustrations particulières, en aucun cas limitatives de l'invention.

## Revendications

1. Dispositif (1) de montage/démontage de pneumatiques de véhicules, notamment du type poids lourds, embarqué dans un véhicule utilitaire léger (2), ledit dispositif (1) comportant au moins un premier châssis (3), un bras (6) articulé à l'une des extrémités dudit châssis (3), un mandrin (7) solidaire de l'extrémité libre dudit bras (6) et agencé pour solidariser et faire tourner une jante autour d'un premier axe (8) de rotation sensiblement horizontal, et un porte-outil (9) muni d'au moins un outil de montage/démontage de pneumatiques, ledit porte-outil (9) étant télescopique et apte à se déplacer par rapport audit bras (6) pour positionner ledit outil en position de travail, ledit dispositif (1) étant **caractérisé en ce qu'**il comporte un moteur thermique (17) solidaire du premier châssis (3) et une pompe hydraulique (18) couplée directement sur ledit moteur thermique (17) et apte à distribuer de l'huile sous pression pour au moins indirectement, d'une part, mettre en mouvement le bras (6) et le porte-outil (9) afin de positionner le mandrin (7) et l'outil dans leur position de travail respective et, d'autre part, faire tourner le mandrin (7) autour dudit premier axe (8) de rotation.

2. Dispositif (1) selon la revendication 1, **caractérisé en ce que** le bras (6) comporte une première portion (61) articulée à l'une des extrémités dudit premier châssis (3) autour d'un deuxième axe (62) sensiblement horizontal et perpendiculaire à l'axe longitudinal du dispositif (1), ladite première portion (61) étant mise en mouvement par un premier actionneur (10).

3. Dispositif (1) selon la revendication 2, **caractérisé en ce que** le bras (6) comporte une deuxième portion (63) articulée à l'extrémité libre de ladite première portion (61) autour d'un troisième axe (64) sensiblement horizontal et perpendiculaire à l'axe longitudinal du dispositif (1), ladite deuxième portion (63) étant mise en mouvement par un deuxième actionneur (11).

4. Dispositif (1) selon l'une quelconque des revendications 1 à 3, **caractérisé en ce que** le porte-outil (9) est associé au moins à un troisième (14) et un quatrième (15) actionneurs disposés respectivement entre le bras (6) et le porte-outil (9) et le long dudit porte-outil (9).

5. Dispositif (1) selon l'une quelconque des revendications 2 à 4, **caractérisé en ce que** les premier, deuxième, troisième et quatrième actionneurs (10,11,14,15) sont du type vérin hydraulique linéaire.

6. Dispositif (1) selon la revendication 5, **caractérisé en ce que** la pompe hydraulique (18) alimente au moins deux moteurs hydrauliques respectivement nommés premier et deuxième moteurs, le premier moteur permettant l'actionnement desdits premier, deuxième, troisième et quatrième actionneurs (10,11,14,15) et le deuxième moteur assurant la rotation du mandrin (7) autour dudit premier axe (8) de rotation.

7. Dispositif (1) selon la revendication 6, **caractérisé en ce que** le deuxième moteur est à vitesse variable.

8. Dispositif (1) selon l'une quelconque des revendications 1 à 7, **caractérisé en ce que** le dispositif (1) comporte un deuxième châssis (16) tubulaire de forme globalement parallélépipédique, solidaire du premier châssis (3) et à l'intérieur duquel sont disposés au moins le moteur thermique (17) et la pompe hydraulique (18).

9. Dispositif (1) selon la revendication 8, **caractérisé en ce que** le deuxième châssis (16) est recouvert, en mode normal d'utilisation, de panneaux insonorisés amovibles.

10. Dispositif (1) selon l'une quelconque des revendications 8 ou 9, **caractérisé en ce que** le dispositif (1) comporte à l'intérieur du deuxième châssis (16) un bloc compresseur (22) entraîné par le moteur thermique (17) grâce à un ensemble poulies-courroies (23), ledit bloc compresseur (22) étant du type à pistons étagés.

## Patentansprüche

1. Vorrichtung (1) zur Montage/Demontage von Fahrzeugreifen, insbesondere des Typs Lastkraftwagen, die in einem leichten Nutzfahrzeug (2) geladen ist, wobei die besagte Vorrichtung (1) zumindest ein erstes Gestell (3) umfasst, einen Arm (6), der an einem der Enden des besagten Gestells (3) gelenkig ist, eine Drehspindel (7), die fest mit dem freien Ende des besagten Arms (6) verbunden ist, und angeordnet ist, um eine Felge festzuhalten und um eine erste, im Wesentlichen horizontale Rotationsachse (8) drehen zu lassen, sowie einen Werkzeughalter (9), der mit zumindest einem Werkzeug zur Montage/Demontage von Reifen versehen ist, wobei der besagte Werkzeughalter (9) ausziehbar ist, und imstande ist, sich im Verhältnis zum besagten Arm (6) zu bewegen, um das besagte Werkzeug in der Arbeitsposition zu positionieren, wobei die besagte Vorrichtung (1) **dadurch gekennzeichnet ist, dass** sie einen Verbrennungsmotor (17) umfasst, der fest mit dem ersten Gestell (3) verbunden ist, sowie eine Hydraulikpumpe (18), die direkt an den besagten Verbrennungsmotor (17) gekoppelt ist, und imstande ist, unter Druck stehendes Öl zu verteilen, um zumindest indirekt einerseits den Arm (6) und den Werkzeughalter (9) in Bewegung zu setzen, um die Drehspindel (7) und das Werkzeug in ihre jeweilige Arbeitsposition zu positionieren, und andererseits die Drehspindel (7) um die besagte erste Rotationsachse (8) drehen zu lassen.

2. Vorrichtung (1) nach Anspruch 1, **dadurch gekennzeichnet, dass** der Arm (6) einen ersten Abschnitt (61) umfasst, der an einem der Enden des besagten ersten Gestells (3) um eine zweite im Wesentlichen horizontale Achse (62) und senkrecht zur Längsachse der Vorrichtung (1) gelenkig ist, wobei der besagte erste Abschnitt (61) durch ein erstes Stellglied (10) in Bewegung gesetzt wird.

3. Vorrichtung (1) nach Anspruch 2, **dadurch gekennzeichnet, dass** der Arm (6) einen zweiten Abschnitt (63) umfasst, der am freien Ende des besagten ersten Abschnitts (61) um eine dritte im Wesentlichen horizontale Achse (64) und senkrecht zur Längsachse der Vorrichtung (1) gelenkig ist, wobei der besagte zweite Abschnitt (63) durch ein zweites Stellglied (11) in Bewegung gesetzt wird.

4. Vorrichtung (1) nach einem der Ansprüche 1 bis 3, **dadurch gekennzeichnet, dass** der Werkzeughalter (9) mit zumindest einem dritten (14) und einem vierten (15) Stellglied verbunden ist, die jeweils zwischen dem Arm (6) und dem Werkzeughalter (9) und entlang des besagten Werkzeughalters (9) angeordnet sind.

5. Vorrichtung (1) nach einem der Ansprüche 2 bis 4, **dadurch gekennzeichnet, dass** das erste, zweite, dritte und vierte Stellglied (10, 11, 14, 15) der Art eines linearen Hydraulikzylinders sind.

6. Vorrichtung (1) nach Anspruch 5, **dadurch gekennzeichnet, dass** die Hydraulikpumpe (18) zumindest zwei Hydraulikmotoren versorgt, die jeweils erster und zweiter Motor genannt werden, wobei der erste Motor die Betätigung des besagten ersten, zweiten, dritten und vierten Stellglieds (10, 11, 14, 15) ermöglicht, und der zweite Motor für die Rotation der Drehspindel (7) um die besagte erste Rotationsachse (8) sorgt.

7. Vorrichtung (1) nach Anspruch 6, **dadurch gekennzeichnet, dass** der zweite Motor einer mit variabler Geschwindigkeit ist.

8. Vorrichtung (1) nach einem der Ansprüche 1 bis 7, **dadurch gekennzeichnet, dass** die Vorrichtung (1) ein zweites rohrförmiges Gestell (16) in einer im Allgemeinen quaderförmigen Form umfasst, das fest mit dem ersten Gestell (3) verbunden ist, und im Inneren desselben zumindest der Verbrennungsmotor (17) und die Hydraulikpumpe (18) angeordnet sind.

9. Vorrichtung (1) nach Anspruch 8, **dadurch gekennzeichnet, dass** das zweite Gestell (16) im normalen Betriebsmodus mit abnehmbaren schallschluckenden Tafeln abgedeckt ist.

10. Vorrichtung (1) nach einem der Ansprüche 8 oder 9, **dadurch gekennzeichnet, dass** die Vorrichtung (1) im Inneren des zweiten Gestells (16) eine Kompressoreinheit (22) umfasst, die durch den Verbrennungsmotor (17) dank einer Einheit aus Riemenscheiben-Riemen (23) angetrieben wird, wobei die besagte Kompressoreinheit (22) eine mit Stufenkolben ist.

## Claims

1. Device (1) for mounting/dismounting tyres of vehicles, in particular heavy goods vehicles, installed in a light utility vehicle (2), said device (1) comprising at least a first chassis (3), an arm articulated (6) on one of the ends of said chassis (3), a chuck (7) secured to the free end of said arm (6) and arranged to secure and rotate a rim about a first substantially horizontal rotation axis (8), and a tool holder (9) provided with at least one tool for mounting/dismounting tyres, said tool holder (9) being telescopic and able to move with respect to said arm (6) in order to position said tool in the working position, said device (1) being **characterised in that** it comprises a heat engine (17) secured to the first chassis (3) and a hydraulic pump (18) coupled directly to said heat engine (17) and able to distribute oil under pressure in order at least indirectly, firstly, to move the arm (6) and the tool holder (9) in order to position the chuck (7) and the tool in their respective working positions and secondly to rotate the chuck (7) about said rotation axis (8).

2. Device (1) according to claim 1, **characterised in that** the arm (6) comprises a first portion (61) articulated at one of the ends of said first chassis (3) about a second substantially horizontal axis (62) perpendicular to the longitudinal axis of the device (1), said first portion (61) being moved by a first actuator (10).

3. Device (1) according to claim 2, **characterised in that** the arm (6) comprises a second portion (63) articulated at the free end of said first portion (61) about a third substantially horizontal axis (64) perpendicular to the longitudinal axis of the device (1), said second portion (63) being moved by a second actuator (11).

4. Device (1) according to any one of claims 1 to 3, **characterised in that** the tool holder (9) is associated with at least third (14) and fourth (15) actuators disposed respectively between the arm (6) and tool holder (9) and along said tool holder (9).

5. Device (1) according to any one of claims 2 to 4, **characterised in that** the first, second, third and fourth actuators (10, 11, 14, 15) are of the linear hydraulic cylinder type.

6. Device (1) according to claim 5, **characterised in that** the hydraulic pump (18) supplies at least two hydraulic motors, respectively referred to as the first and second motors, the first motor actuating said first, second, third and fourth actuators (10, 11, 14, 15) and the second motor rotating the chuck (7) about said first rotation axis (8).

7. Device (1) according to claim 6, **characterised in that** the second motor is of the variable speed type.

8. Device (1) according to any one of claims 1 to 7, **characterised in that** the device (1) comprises a second tubular chassis (16) with a roughly parallelepiped shape, secured to the first chassis (3) and inside which at least the heat engine (17) and the hydraulic pump (18) are arranged.

9. Device (1) according to claim 8, **characterised in that** the second chassis (16) is covered, in normal use mode, with removable sound-proofing panels.

10. Device (1) according to either one of claims 8 or 9, **characterised in that** the device (1) comprises, inside the second chassis (16), a compressor unit (22) driven by the heat engine (17) by means of a pulley/belt assembly (23), said compressor unit (22) being of the staged piston type.
